# EUROPEAN PATENT APPLICATION

(11) **EP 4 357 961 A1**
(43) Date of publication of application: **24.04.2024**
(21) Application number: 22201845.9
(22) Date of filing: 17.10.2022
(51) Int. Cl.: G06F 30/17, G06F 30/23, G06F 30/27, G06F 119/02, G06F 113/18, G06F 115/12

(54) **RELIABILITY ASSESSMENT OF AN ELECTRONIC COMPONENT CARRIER OR A PACKAGE COMPRISING IT USING AI-SUPPORTED FINITE ELEMENT ANALYSIS**

(71) Applicant: AT & S Austria Technologie & Systemtechnik Aktiengesellschaft, 8700 Leoben-Hinterberg (AT)
(72) Inventor: Krivec, Thomas, 8740 Zeltweg (AT); Zuendel, Julia, 8700 Leoben (AT); Tao, Qi, 8700 Leoben (AT)
(74) Representative: Sykora & König Patentanwälte PartG mbB

(57) **Abstract**

A method for a reliability assessment of an electronic component carrier or a package comprising an electronic component carrier (1). The method comprises: providing a global simulation model of the component carrier or package (1), wherein a predetermined number of geometric properties of the component carrier or package (1) and of its constituent parts made of different materials and of physical properties of materials used in said constituent parts are defined as independent variables in a parameter space of the global simulation model; and wherein the global simulation model is configured to receive input data including a point in the parameter space and is configured to output data indicative of resulting geometric and/or physical properties within a global volume of the resulting component carrier or package (1). The method comprises running a simulation of the global simulation model and identifying, in its output data, boundary conditions for a plurality of local sub-portions (2) of the component carrier or package (1). The method further comprises providing at least one data-based local model for said local sub-portions (2), each data-based local model being trained to receive said boundary conditions as input data and provide a criticality value indicative of a reliability of the respective local sub-portion (2) as output data; running the at least one local data-based model for each of said local sub-portions (2) and identifying, in the respective output data, those local sub-portions (2) whose criticality value is above at least one predetermined threshold.

## Description

### FIELD OF THE INVENTION

The invention relates to a method, a computer program and a computer-readable medium for a reliability assessment of an electronic component carrier or a package comprising an electronic component carrier. Furthermore, the invention relates to a reliability assessment device adapted for performing reliability assessment of an electronic component carrier or of a package comprising it, according to this method.

### BACKGROUND OF THE INVENTION

Finite element analysis (FEA) has become an important tool in the development of electronic systems or subsystems such as printed circuit boards (PCBs) or printed circuit board assemblies (PCBAs). Due to a high number of geometric features such as vias or plated through holes (PTHs) in those systems, it is still highly difficult to identify the actual critical features, whose properties are not as good as required for the desired performance of the total system.

For modelling a complex part or system, a global model / sub-model approach is known as a standard procedure. According to this approach, for the total structure or system to be assessed, typically, a finite element model considering the overall geometry of the structures, assembly or system is set up. In order to keep simulation time and cost low, the discretization level (or mesh size) for the whole part is typically chosen rather coarse. If it is necessary to have an analysis of a critical segment of the total structure in more detail, the critical segment is modelled as a high-resolution model featuring a comparably fine mesh size. This sub-model is placed at the corresponding location, and the deformation or stress situation calculated in the global model is taken as boundary conditions or input for the local sub-model. In this way, it is possible to have a high-resolution finite element analysis of critical areas of a structure or system.

However, a downside of this approach is that for both - the global as well as the local simulation models - often rather long calculation times of several hours need to be considered. This limits the applicability of the local models. As a consequence, normally, a pre-decision needs to be taken which segments of the structure can be analyzed in detail and which will be not looked at. This may be especially critical for electronic systems. For example, a modern high-density interconnect board (HDI-PCB) typically features tens of thousands of laser drillings such as vias or PTHs. It is impossible to do an FEA study for each of these laser drillings using a local finite element model in order to identify the most critical ones. Therefore, currently, critical areas of complex parts and systems such as PCBs or PCBAs are identified mainly based on experience, and current state of the art FEA models are built based on nominal data or "best case"-"worst case" situations that are, again, defined by experience.

### DESCRIPTION OF THE INVENTION

It is an objective of the invention to provide an alternative and/or improved method for assessing a reliability of an electronic component carrier or a package comprising an electronic component carrier such as, by way of example only, a printed circuit board (PCB) or a printed circuit board assembly (PCBA). It is a further objective of the invention to provide a most reliable and/or robust and/or efficient method of detecting critical local features within the total component carrier or package, which could impair its reliability.

These objectives are achieved by the subject-matter of the independent claims. Further exemplary embodiments are evident from the dependent claims and the following description.

A first aspect of the invention relates to a method for a reliability assessment of an electronic component carrier or a package comprising an electronic component carrier (also abbreviated as "component carrier or package" in the following). The component carrier or package may, by way of example only, be one or more of the following: a single or multilayer printed circuit board (PCB), a high-density interconnect PCB (HDI-PCB), an assembled printed circuit board (PCBA) including at least one active or passive component, an electronic module including mechanical components such as shielding cans, an integrated circuit (IC-) substrate, a semiconductor chip, a substrate provided with conducting paths and electrical connection means, a single-die package or a multi-die package, a heterogeneous package, or an electronic system combining one or more of the above-mentioned entities in one functional unit. The component carrier or package may, for instance, be a package or module in the sense of an electronic unit that combines a defined functionality in one entity. It may also be a complex system which, for example, combines several modules on one carrier board and may even include a housing. Herein, the term "package" may, for example, mean one or more component carriers or semiconductor devices or integrated circuits or electronic modules, which are included in a single housing or casing and/or permanently assembled together to an integral entity. The package may, in particular, be provided with electrical connection means such as conducting pads, bumps, balls or pillars for connecting the package to external devices or environments.

The method may be a computer-implemented method, which may be performed automatically by a suitable control unit, e.g. by loading and running a corresponding computer program in a processor of the control unit.

According to an embodiment of the invention, the method comprises providing a global simulation model of the component carrier or package. The global simulation model may, for instance, be based on a finite element analysis (FEA). A predetermined number of geometric properties of the component carrier or package and of its constituent parts made of different materials and of physical properties of materials used in said constituent parts and, as the case may be, also at least one parameter of processing the component carrier or package are defined as independent variables in a parameter space of the global simulation model.

For example, those geometric and physical properties of materials used in the component carrier or package may be defined as variables in the parameter space of the global simulation model which have a particular influence on the resulting properties relevant for the reliability of the component carrier or package, such as temperature, strain or stress in the respective materials. Among such physical properties there may, for example, be a coefficient of thermal expansion and/or Young's modulus and/or absolute or relative shrinkage of these materials. Furthermore, one or more of these physical properties, e.g. the shrinkage values, may be defined as additionally depending on at least one parameter of processing the component carrier or package, such as applied thermal or pressure loads etc.

According to an embodiment of the invention, the global simulation model is configured to receive input data including a point in the parameter space and is configured to output data indicative of resulting geometric and/or physical properties (such as temperature, stress, strain, forces, deformation) within a global volume of the resulting component carrier or package. In particular, the output data may also be provided as a function of time during the fabrication process of the component carrier or package.

According to an embodiment of the invention, the method further comprises running a simulation of the global simulation model and identifying, in its output data, boundary conditions for a plurality of local sub-portions of the component carrier or package, such as vias, plated through holes (PTHs) and other types of local sub-portions, which may be potentially critical for the reliability assessment of the component carrier or package. The local sub-portions as such may, for example, be pre-determined features within the global volume of the component carrier or package, such as e.g. all vias and other types of local features mentioned herein.

According to an embodiment of the invention, the method further comprises providing at least one data-based local model for said plurality of local sub-portions, each data-based local model being trained by any suitable algorithm (e.g. by a machine learning method such as artificial (deep) neuronal net, Bayesian Algorithms, Clustering Algorithms, etc.) so as to receive said boundary conditions as input data and to provide a criticality value indicative of a reliability of the respective local sub-portion as output data. The criticality value may, for example, be determined with respect to at least one predetermined critical reliability criterion such as (critical) stress or strain or deformation at or inside the respective local sub-portion. For example, the criticality value may also be a vector value, i.e. include several vector components, each of which refers to another predetermined critical reliability criterion such as critical stress or strain or deformation, etc.

According to an embodiment of the invention, the method further comprises the steps of running the at least one local data-based model for each of the local sub-portions and identifying, in the respective output data, those local sub-portions whose criticality value is above at least one predetermined threshold, meaning that it is not reliable enough to be manufactured.

For example, the step of providing a data-based local model and/or providing suitable training data for it may include providing and running a local simulation model, e.g. based on a fine-meshed FEA, for a local sub-portion of a pre-determined type (e.g. via). This step may alternatively or additionally include providing and running a supplemented global simulation model which additionally (i.e. in addition to the global simulation model) includes the local simulation model for local sub-portions of the respective type.

In other words, an idea of the present method is to substitute extremely time-consuming local simulation models, such as based on finite element analysis as known in the art, by one or more data-based (or data-driven) compact local models (such as neural network-based models or other Al-supported models) representing the behavior of the local FE-model in the respective local sub-portion with sufficient accuracy by employing artificial intelligence techniques (Al). Once such a "surrogate" data-based local model is provided and trained for some specific type of local sub-portions (e.g. for vias or for solder bumps. etc.), it may be run in a significantly shorter time for a criticality assessment of e.g. hundreds of thousands of local sub-portions of the same type. That is, the calculation times of a data-based local model may typically lie below 0.1 s, instead of several hours as required for an FEA-based local simulation model known from the art. Thus, this allows to perform an estimation of criticality/reliability at actually any position where corresponding features (sub-portions) occur in the global system (component carrier or package) in a short time.

For example, a component carrier or package may comprise more than 1000 or even hundreds of thousands local sub-portions (or features) such as vias, solder bumps, etc. which could potentially be critical for the overall performance and reliability of the component carrier or package. With the present method, all those local sub-portions can be assessed for criticality with the at least one data-based local model due to its short calculation times, so that no manual pre-selection based on experience is needed and the method can ensure that no actually critical feature (sub-portion) is overlooked.

For example, a suitable training data set for a data-based local model may be obtained from a sufficiently large number, such as e.g. 100-200 or several hundreds, of local (and/or supplemented global) simulations based e.g. on FEA and covering possibly all relevant criticality scenarios for the corresponding type of local sub-portions. A labeled training data set for the data-based local model may, for example, be obtained from these simulation runs and include a correspondingly large variety of input-output data sets of the local (and/or supplemented global) simulation model and resulting criticality values for this type of sub-portions of the global system (component carrier or package). This allows to take into account a very broad or even full range of possible geometry and production influences (such as geometry variations, material variations, production influences, ...) on the local level of, in principle, each relevant sub-portion of the component carrier or package by including these influences/variations/parameters in the training data set and, if necessary, in the input data of the respective data-based local model.

In other words, the at least one data-based (or data-driven) "surrogate" local model may be built on the results of a local feature (i.e. sub-portion) simulation model, such as FEA model. For example, automated model generation scripts, homogenization strategies, multi-scale modelling approaches including sub-modelling techniques and non-linear constitutive modelling of the relevant materials may be used to meet the related challenges. The developed feature level surrogate models (i.e. data-based local models) may then be applied as sub-models to the global simulation model in a way that, basically, deformation and stress situation at the feature location in the global simulation model are used as input data for the data-based local model and allow to estimate a stress/strain-based criticality level (in form of the output criticality value) for each single design feature (i.e. sub-portion such as via, see below for more examples).

This approach and the very fast calculation time required for the data-based ("surrogate") local models allows the application of the local feature models to merely every position of the global structure and model. Thus, it is possible to assess e.g. all vias (and other potentially critical features or sub-portions) in a single component carrier or package such as a PCB or a HDI board (whose number of features to be considered might be more than 100000 features) and rate all features in the component carrier or package and, this way, also the criticality for failure for the full board (i.e. component carrier or package). This approach, for the first time, makes it possible to assess, for example, all potentially critical design features for a full PCB or PCBA, in contrast to the prior art global model/sub-model approaches solely based on FEA-models, where critical areas could only be identified by manual selection based on experience.

According to an embodiment of the invention, the above-mentioned plurality of local sub-portions of the component carrier or package includes at least one or several, and ideally all, local sub-portions which belong to one or more of the following or other potentially critical types: single laser vias; stacks of at least two laser vias; plated through holes (PTHs); non-plated through holes; pads; conductive lines or segments thereof; solder bumps or solder balls; copper pillars; electronic components (such as semiconductor chips, e.g. integrated circuits (ICs) or application specific integrated circuits (ASICs), or any specific elements of an electronic circuit).

In particular, local sub-portions belonging to one and the same of these and/or other types may be described by one and the same data-based local model, which may be trained on one and the same training data set. For local sub-portions of mutually different types (of the above-mentioned and/or any other possible types), data-based local models of correspondingly different types may be used.

According to an embodiment of the invention, the electronic component carrier or package comprising an electronic component carrier is one or more of the following: a single-layer or multi-layer printed circuit board; a high-density interconnect printed circuit board; an assembled printed circuit board including at least one active or passive component; an electronic module including mechanical components such as shielding cans; an IC substrate; a single- or multi-die package; a heterogeneous package; and/or an electronic system combining one or more of the above-mentioned entities in one functional unit. In particular, a single-layer or multi-layer printed circuit board may comprise a lot of critical features, which without the method solely can be identified after manufacturing and testing. With the method, critical features can even be identified before.

According to an embodiment of the invention, the global simulation model is based on a finite element method (also referred to as FEA, finite element analysis or approach); and the boundary conditions for a local sub-portion comprise a boundary portion of a mesh used in the finite element method. Finite element methods may perform very well in the context of thermomechanical simulations and problems. Other possible simulation methods for the global simulation model are, by way of example only, BEM: Boundary element method; FDM: Finite difference method; FVM: Finite volume method; AEM: Applied Element Method; DEM: Discrete element method; A-FEM: Augmented-Finite Element Method; GFEM: Generalized finite element method; Mixed finite element method; hp-FEM; hpk-FEM; XFEM: Extended finite element method; SBFEM: Scaled boundary finite element method; S-FEM: Smoothed finite element method; Spectral element method; Meshfree methods; Discontinuous Galerkin methods; Finite element limit analysis; Stretched grid method; Loubignac iteration; CPFEM: Crystal plasticity finite element method; VEM: Virtual element method.

According to an embodiment of the invention, the at least one data-based local model is trained by a machine learning method, which may be, for example, based on at least one of: an artificial (deep) neuronal net; a Bayesian Algorithm; a Clustering Algorithm. With an automatically trained machine learning method, a high performance may be achieved without the need for complex fine tuning done by a human. Alternatively, the at least one data-based local model may be configured to perform as described herein above and below or trained using any other suitable algorithm, which is not necessarily based on machine learning.

According to an embodiment of the invention, the step of providing and/or running the at least one local data-based model is performed through or includes providing and running a supplemented global simulation model which additionally (i.e. in addition to the above-mentioned global simulation model) includes a local model, such as a local simulation model, of the respective local sub-portion. If the global simulation model is based on a finite element method using a coarse mesh size, the local simulation model may, for example, also be based on a finite element method describing the respective local sub-portion in more detail with a finer mesh size of finite elements.

According to an embodiment of the invention, the global simulation model is a time-dependent model. This means that each simulation run comprises a dynamic process (e.g. characterizing a dynamic fabrication process of the component carrier or package) including chemical and/or physical changes of the component carrier or package, in particular under varying environmental conditions (such as externally applied thermal and/or pressure loads) whose initial values and/or variation rate may be comprised in the input data of the global simulation model, e.g. as above-mentioned parameters of processing the component carrier or package. Thereby, time-dependent output data may be obtained, which, in turn, may be used as time-dependent input data for the data-based local models, which allows to assess the reliability and criticality of local sub-portions over time and/or in a most rigorous and thorough manner. For example, such a dynamic process may include a heat-up and/or cool-down process, which may optionally also be repeated several times for a still more rigorous or detailed reliability investigation.

According to an embodiment of the invention, the output data of the global simulation model is time-dependent. This means that the output data of the global simulation model comprises at least one function of time characterizing a dynamic processing (e.g. during the fabrication process) of the component carrier or package including its chemical and/or physical changes, in particular under varying environmental conditions (such as externally applied thermal and/or pressure loads) whose initial values and/or variation rate may be comprised in the input data of the global simulation model. This may, in turn, be used as time-dependent input data for the data-based local models, which allows to assess the reliability and criticality of local sub-portions over time (e.g. during a fabrication process) and/or in a most rigorous and thorough way. For example, such a dynamic process may include a heat-up and/or cool-down process, which may optionally also be repeated several times for a still more rigorous or detailed reliability investigation.

According to an embodiment of the invention, at least one of said data-based local models is time-dependent. This means that it comprises a dynamic process including chemical and/or physical changes of the respective local sub-portion of the component carrier or package, in particular under varying environmental conditions (such as externally applied thermal and/or pressure loads) whose initial values and/or variation rate may be comprised in the input data of the respective data-based local model and/or of the global simulation model. This may allow to assess the reliability and criticality of local sub-portions over time (e.g. during a fabrication process of the component carrier or package) and/or in a most rigorous and thorough way. For example, such a dynamic process may include a heat-up and/or cool-down process, which may optionally also be repeated several times for a still more rigorous or detailed reliability investigation.

According to an embodiment of the invention, for at least one of the data-based local models, additional geometric, physical and/or process parameters of the respective local sub-portion of the component carrier or package are comprised in the input data in addition to the boundary conditions obtained from the output of the global simulation model. In this manner, for example, varying geometrical and/or physical properties of individual local sub-portions (such as different diameters, shapes, materials) may be rigorously accounted for by a data-based local model which is used for a (large) number of local sub-portions of one and the same type (e.g. vias) with differing individual size, shape or material configuration.

According to an embodiment of the invention, for at least one of the data-based local models, training input data also comprise input data sets with predefined geometric and/or physical deviations from a predetermined standard configuration of the respective local sub-portion of the component carrier or package. Thereby, for example, unprecise manufacturing of respective electronic components, such as, for example, an unprecise alignment of laser drilling for a via through several layers, may be accounted for. In this embodiment, the criticality value in the corresponding training output data for said data-based local model is defined as a function of said deviation. In this manner, the data-based local model may be prepared by training to adequately assess the impact of an unprecise manufacturing and other individual defects of a local sub-portion on its reliability, so as to be able to determine the respective criticality value in a most reliable manner, also in case of unexpected deviations from standard.

According to an embodiment of the invention, the method further comprises calculating a global criticality value of the component carrier or package as a function of the criticality values obtained from all local sub-portions for which the at least one data-based local model has been run, which ideally covers all local sub-portions (i.e. features) of the component carrier or package which could potentially become critical for its reliability. For example, the global criticality value may be defined as a mean or maximum value of the criticality values obtained from the local sub-portions. The global criticality value of the component carrier or package may then be iteratively optimized, e.g. by selecting at least one of said local sub-portions and varying its geometric, physical and/or process parameters included in the input data of its data-based local model (such as different materials, different diameters and shapes of vias and other geometry of components presented by local models, etc.) so as to reduce the calculated global criticality value of the component carrier or package. These optimization steps may, for example, be repeated in an iterative manner until a minimum or another predefined optimal value of the global criticality value is achieved. Each iterative optimization step may at least include updating/optimizing said properties and running the data-based local models for each of the concerned local sub-sections, so as to iteratively update their criticality values. Thereby, an optimal configuration and performance of the total component carrier or package may be achieved by iteratively optimizing it with respect to properties of local sub-portions, finding out e.g. optimal diameters of vias, optimal shapes of solder bumps, etc. Thereby, the reliability of the component carrier or package may be not only assessed in a most reliable manner but also improved or even optimized.

According to an embodiment of the invention, the method further comprises a step of manufacturing or, respectively, not manufacturing said component carrier or package depending on whether local sub-portions have been identified whose criticality values are above the at least one predetermined threshold. The method may further comprise a step of adapting geometric, physical and/or process parameters of those local sub-portions of the component carrier or package, whose criticality values are identified to lie above the at least one predetermined threshold, and obtaining updated criticality values by running the at least one data-based local model for these local sub-sections once again. This adapting is performed (or, if necessary, iteratively repeated several times) such that (or until) all the criticality values are reduced below the at least one predetermined threshold, prior to manufacturing the component carrier or package. In particular, the component carrier or package may be fabricated according to those parameter values of the local sub-portions of the component carrier or package, for which the above-mentioned minimum or predefined optimal value of the global criticality value is achieved. Thereby, the reliability of the component carrier or package may be not only assessed in a most reliable manner but also improved or even optimized.

Further aspects of the invention relate to a computer program for assessing reliability of an electronic component carrier or package comprising an electronic component carrier, which computer program, when being executed by a processor, is adapted to carry out the steps of the method as described above and in the following as well as to a computer-readable medium, in which such a computer program is stored. For example, the computer program may be executed in a processor of a control unit, which is provided and configured to perform the method. The computer-readable medium may be a memory of this control unit.

In general, a computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. The computer-readable medium may be a non-transitory or transitory medium.

A further aspect of the invention relates to a reliability assessment device adapted for performing reliability assessment of an electronic component carrier or package comprising an electronic component carrier. The reliability assessment device comprises a memory storing a computer program, which, when being executed by a processor of the reliability assessment device, is adapted to carry out the steps of the method as described herein above and below.

It has to be understood that features of the method as described above and in the following may be features of the computer program, the computer-readable medium and the reliability assessment device as described above and in the following, and vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a perspective view of a component carrier whose reliability can be assessed by a method according to an embodiment of the invention;
Fig. 2 shows a graphical diagram representing output data of a global simulation model of the component carrier of Fig. 1 in the method according to an embodiment of the invention, wherein an enlarged portion shows a plurality of boundary conditions for local sub-portions of the component carrier, identified in the output data.
Fig. 3a schematically shows a perspective view of a local sub-portion of the component carrier of Fig. 1, whose criticality value may be assessed by a time-dependent data-based local model in the method according to an embodiment of the invention.
Fig. 3b shows a graphical diagram representing a time-dependent thermal load applied to the local sub-portion of Fig. 3a in the respective data-based local model.
Fig. 4 shows a flow diagram of a method according to an embodiment of the invention for a reliability assessment of a component carrier or a package such as shown in Fig. 1.

The reference symbols used in the drawings, and their meanings, are listed in summary form in the list of reference symbols.

### DETAILED DESCRIPTION OF EXEMPLARY EMBODIMENTS

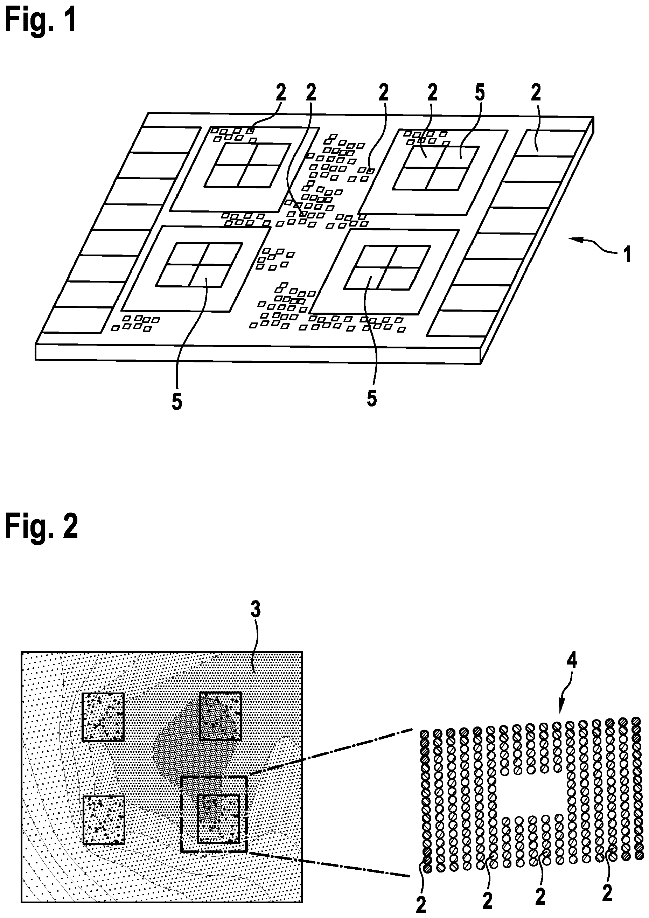

Fig. 1 schematically shows a perspective view of a component carrier or package 1 whose reliability can be assessed by a method according to an embodiment of the invention. By way of example only, the component carrier or package 1 is a printed circuit board, PCB. As recognizable from Fig. 1, numerous (for example, thousands or hundreds of thousands) local sub-portions 2 featuring various electronic components such as resistors and other electronic components of several chips 5 as well as connection means such as vias and solder bumps, etc. are distributed over a total volume of the component carrier or package 1.

Fig. 2 shows a graphical diagram 3 representing output data of a global simulation model of the component carrier or package 1 of Fig. 1 in the method according to an embodiment of the invention. An enlarged portion 4 of the diagram 3 shows a plurality of local sub-portions 2 of the component carrier or package 1, or, to be more precise, boundary conditions for the individual sub-portions 2 as identified in the output data of the global simulation model. In this example, the global simulation model is based on a finite element method (also referred to as FEA, finite element analysis or approach); and the boundary conditions for a local sub-portion 2 (such as stress or strain at the position of the local sub-portion 2) comprise a boundary portion of a mesh used in the finite element method.

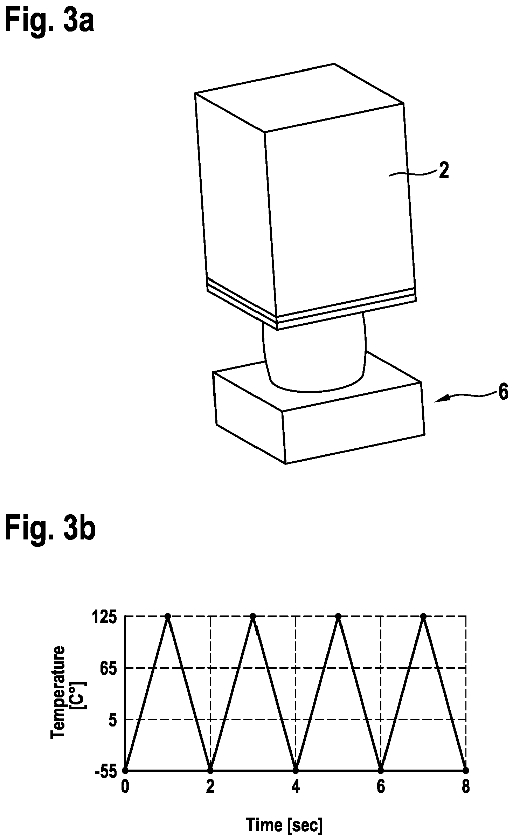

Fig. 3a schematically shows a perspective view of a local sub-portion 2 of the component carrier or package 1 of Fig. 1, whose criticality value may be assessed by a time-dependent data-based local model in the method according to an embodiment of the invention. In this example, the local sub-portion 2 features a solder bump 6 under one of chips 5 in the component carrier or package 1 of Fig. 1.

Fig. 3b shows a graphical diagram representing a time-dependent thermal load applied to the local sub-portion 2 of Fig. 3a during a manufacturing process of the component carrier or package 1 of Fig. 1.

In the prior art, in order to find out whether the local sub-portion 2, such as a single solder bump 6 of Fig. 3a, shows criticality impairing the reliability of the total PCB, a local sub-model based on finite elements method with a finer mesh than in the global simulation model needs to be run with boundary conditions as obtained from the output data of the global simulation model as indicated in Fig. 2, in order to investigate this local sub-portion 2 with a sufficiently high resolution. This, however, typically requires additional calculation times of several hours per local simulation sub-model, thus limiting a capacity of a local reliability assessment to typically only 0-20 sub-model runs per component carrier or package 1, such as in Fig. 1, whereas the total number of local sub-portions 2 is e.g. 100000. In other words, only up to 20 selected areas or local sub-portions 2 can be checked for actual criticality, which requires a manual pre-selection based on experience, wherein the reliability of all the remaining local sub-portions 2 of the total component carrier or package 1 cannot be checked.

To overcome this limitation and to be able to check all (such as thousands or hundreds of thousands) of local sub-portions 2 in the component carrier or package 1 for their reliability or criticality, in the method proposed herein, a data-based (or data-driven) local model, such as an artificial neural network (ANN) model, is run instead of a local simulation model for each local sub-portion 2 under test. In the input data of the data-based local model, boundary conditions obtained from the global simulation model for the respective local sub-portion 2 are used. Additionally, initial and/or final values of thermal loads and their variation rates as shown in Fig. 3b may be contained in the input data. Due to very fast calculation times of typically below 0.1 seconds for a data-based local model for each local sub-portion 2, all potentially interesting or critical features, such as all vias or solder bumps in a PCB, may be individually checked for criticality, prior to manufacturing the PCB. In particular, no manual pre-selection of a limited number of features, whose criticality is known to be highly likely by experience, is necessary. Instead, a reliable assessment of criticality including a rigorous check of all potentially critical features is possible.

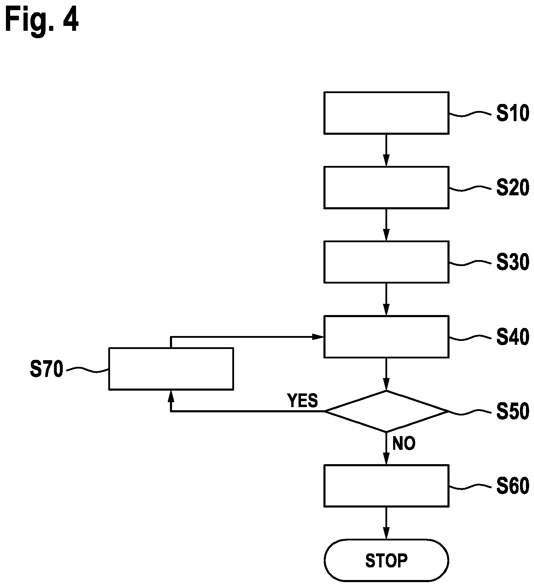

In the following, this method will be briefly illustrated with reference to Fig. 4, wherein further details and possible options are described herein above in the detailed description and herein below in the claims and will thus not be repeated in their entirety once again.

Fig. 4 shows a flow diagram of a method according to an embodiment of the invention for a reliability assessment of a component carrier or a package 1 such as a PCB shown in Fig. 1.

The method may be a computer-implemented method performed automatically in a suitable control unit or in a reliability assessment device as proposed herein above and in the claims.

In a first step S10 of the method, a global simulation model of the component carrier or package 1 is provided. This step may, for example, be implemented by downloading a computer program which includes the global simulation model into the control unit or into the reliability assessment device, which is provided to carry out the method. The global simulation model may, for instance, be based on a finite element analysis (FEA).

A predetermined number of geometric properties of the component carrier or package 1 and of its constituent parts (such as chips 5 and electronic components comprised therein as well as various connection means) made of different materials and of physical properties of materials used in said constituent parts and, as the case may be, also at least one parameter of processing the component carrier or package 1 (such as initial and/or final values and/or variation rate of external thermal loads shown in Fig. 3b) are defined as independent variables in a parameter space of the global simulation model.

The simulation model provided in step S10 is configured to receive input data including a point in the parameter space. It is further configured to output data indicative of resulting geometric and/or physical properties (such as temperature, stress, strain, forces, deformation) within a global volume of the component carrier or package 1, as illustrated e.g. in the diagram 3 of Fig. 2. In particular, the output data may also be provided as a function of time during the fabrication process of the component carrier or package 1.

In a second step S20 of the method, a simulation of the global simulation model is run. In its output data, e.g. as indicated in Fig. 2, boundary conditions for a plurality of local sub-portions 2 of the component carrier or package 1, such as the solder bump 6 shown in Fig. 3a, are identified. The local sub-portions 2 as such may, for example, be pre-determined features within the global volume of the component carrier or package 1, such as e.g. all vias and all solder bumps 6 and/or other types of local features mentioned herein.

In a further step S30, at least one data-based local model is provided for the plurality of local sub-portions 2. Each data-based local model is trained by any suitable algorithm (e.g. by a machine learning method such as artificial (deep) neuronal net, Bayesian Algorithms, Clustering Algorithms, etc.) so as to receive the above boundary conditions as input data and provide a criticality value indicative of a reliability of the respective local sub-portion 2 as output data. The criticality value may, for example, be determined with respect to at least one predetermined critical reliability criterion such as (critical) stress or strain or deformation at or in the respective local sub-portion 2.

In particular, local sub-portions 2 belonging to one and the same type (e.g. all solder bumps 6 as shown in Fig. 3a) may be described by one and the same data-based local model, which may also be trained on one and the same training data set. For local sub-portions of mutually different types (e.g. vias as distinguished from solder bumps 6), data-based local models of correspondingly different types may be used.

For example, the step S30 of providing a data-based local model and/or providing suitable training data for it may include running a local simulation model, which may also be based on FEA, for a local sub-portion 2 of the respective type. This step may alternatively or additionally also include running a supplemented global simulation model which additionally (i.e. in addition to the global simulation model) includes a local simulation model for a local sub-portion of this type.

In a further step S40, the at least one local data-based model provided in step S30 is run for each of the local sub-portions of the respective type. In the output data generated thereby, those local sub-portions 2 are identified whose criticality value is above at least one predetermined threshold, meaning that it is not reliable enough to be manufactured.

In a subsequent step S50, it is checked whether one or more critical local sub-portions 2 have been identified in step S40 (YES) or not (NO).

If not, in a subsequent step S60, the component carrier or package 1 may be manufactured, e.g. by generating a control signal for a manufacturing unit to start the manufacturing process using currently saved parameter values of the component carrier or package 1.

Otherwise, as described in more detail herein above, the method may further comprise a step S70 of adapting geometric, physical and/or process parameters of those local sub-portions 2 of the component carrier or package 1, whose criticality values have been identified to lie above the at least one predetermined threshold, and obtaining updated criticality values by running the at least one data-based local model for these local sub-sections in step S40 once again. This adapting is performed (or, if necessary, iteratively repeated several times) such that (or until) all the criticality values are reduced below the at least one predetermined threshold, prior to manufacturing the component carrier or package 1 in step S60 with correspondingly updated parameter values.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

1 component carrier or package, such as printed circuit board, PCB
2 local sub-portion, such as via or solder bump
3 graphical diagram representing output data of a global simulation model
4 enlarged portion of the diagram showing boundary conditions for a plurality of local sub-portions
5 semiconductor chip as a part of the component carrier or package
6 solder bump under a semiconductor chip

## Claims

1. A method for a reliability assessment of an electronic component carrier or a package comprising an electronic component carrier (1), the method comprising:
providing a global simulation model of the component carrier or package (1), wherein a predetermined number of geometric properties of the component carrier or package (1) and of its constituent parts made of different materials and of physical properties of materials used in said constituent parts are defined as independent variables in a parameter space of the global simulation model;
wherein the global simulation model is configured to receive input data including a point in the parameter space and is configured to output data indicative of resulting geometric and/or physical properties within a global volume of the resulting component carrier or package (1);
running a simulation of the global simulation model;
identifying, in the output data of the global simulation model, boundary conditions for a plurality of local sub-portions (2) of the component carrier or package (1);
providing at least one data-based local model for said local sub-portions (2), each data-based local model being trained so as to receive said boundary conditions as input data and provide a criticality value indicative of a reliability of the respective local sub-portion (2) as output data;
running the at least one local data-based model for each of said local sub-portions (2) and identifying, in the respective output data, those local sub-portions (2) whose criticality value is above at least one predetermined threshold.

2. The method of claim 1, wherein
said plurality of local sub-portions (2) of the component carrier or package (1) includes at least one or several, and preferably all, local sub-portions (2) which belong to one or more of the following or other potentially critical types:
single laser vias;
stacks of at least two laser vias;
plated through holes;
non-plated through holes;
pads;
conductive lines or segments thereof;
solder bumps or solder balls;
copper pillars;
electronic components; and
wherein local sub-portions (2) of these and/or other different types are preferably described by data-based local models of correspondingly different types.

3. The method of claim 1 or 2, wherein said electronic component carrier or package comprising an electronic component carrier (1) is one or more of the following:
a single-layer or multi-layer printed circuit board;
a high-density interconnect printed circuit board;
an assembled printed circuit board including at least one active or passive component;
an electronic module including mechanical components such as shielding cans;
an IC substrate;
a single- or multi-die package;
a heterogeneous package;
an electronic system combining one or more of the above-mentioned entities in one functional unit.

4. The method of one of the previous claims, wherein
the global simulation model is based on a finite element method; and
the boundary condition for a local sub-portion (2) comprises a boundary portion of a mesh used in the finite element method.

5. The method of one of the previous claims, wherein
the at least one data-based local model is trained by a machine learning method based on at least one of:
an artificial (deep) neuronal net;
a Bayesian Algorithm;
a Clustering Algorithm.

6. The method of one of the previous claims, wherein
the step of providing and/or running the at least one local data-based model is performed through or includes providing and running a supplemented global simulation model which additionally includes a local simulation model for the respective local sub-portion (2).

7. The method of one of the previous claims, wherein
the global simulation model is time-dependent in that said simulation run comprises a dynamic process including chemical and/or physical changes of the component carrier or package (1), in particular under varying environmental conditions whose initial values and/or variation rate are comprised in the input data of the global simulation model; and
the dynamic process preferably includes a heat-up and/or cool-down process.

8. The method of one of the previous claims, wherein
the output data of the global simulation model is time-dependent in that it comprises at least one function of time characterizing a dynamic processing of the component carrier or package (1) including its chemical and/or physical changes, in particular under varying environmental conditions whose initial values and/or variation rate are comprised in the input data of the global simulation model; and
the dynamic process preferably includes a heat-up and/or cool-down process.

9. The method of one of the previous claims, wherein
at least one of said data-based local models is time-dependent in that it comprises a dynamic process including chemical and/or physical changes of the respective local sub-portion (2) of the component carrier or package (1), in particular under varying environmental conditions whose initial values and/or variation rate are comprised in the input data of the respective data-based local model; and
the dynamic process preferably includes a heat-up and/or cool-down process.

10. The method of one of the previous claims, wherein
for at least one of said data-based local models, additional geometric, physical and/or process parameters of the respective local sub-portion (2) of the component carrier or package (1) are comprised in the input data in addition to said boundary conditions obtained from the output of the global simulation model.

11. The method of one of the previous claims, wherein
for at least one of said data-based local models, training input data comprise predefined geometric and/or physical deviations from a predetermined standard configuration of the respective local sub-portion (2) of the component carrier or package (1); and
the criticality value in the corresponding training output data for said data-based local model is defined as a function of said deviation.

12. The method of one of the previous claims, further comprising:
calculating a global criticality value of the component carrier or package (1) as a function of all the criticality values obtained from the local sub-portions (2); and
iteratively optimizing said global criticality value of the component carrier or package (1) by selecting at least one of said local sub-portions (2) and varying its geometric, physical and/or process parameters included in the input data of its data-based local model so as to reduce the calculated global criticality value of the component carrier or package (1), preferably until a minimum or another predefined optimal value of the global criticality value is achieved.

13. The method of one of the previous claims, preferably in connection with claim 12, further including
a step of manufacturing said component carrier or package (1) depending on whether local sub-portions (2) have been identified whose criticality values are above the at least one predetermined threshold; and/or
adapting geometric, physical and/or process parameters of those local sub-portions (2) of the component carrier or package (1), whose criticality values are identified to lie above the at least one predetermined threshold, such that their criticality values are reduced below the at least one predetermined threshold, prior to manufacturing the component carrier or package (1); and
preferably manufacturing said component carrier or package (1) according to those parameters of said local sub-portions (2) of the component carrier or package (1), for which said minimum or said predefined optimal value of the global criticality value is achieved.

14. A computer program for a reliability assessment of an electronic component carrier or package (1) comprising an electronic component carrier, which computer program, when being executed by a processor, is adapted to carry out the steps of the method of one of the previous claims.

15. A computer-readable medium, in which a computer program according to claim 14 is stored.

16. A reliability assessment device adapted for performing reliability assessment of an electronic component carrier or package comprising an electronic component carrier (1), the reliability assessment device comprising a memory storing a computer program, which, when being executed by a processor of the reliability assessment device, is adapted to carry out the steps of the method of one of the claims 1 to 13.
